# EUROPEAN PATENT APPLICATION

(11) **EP 2 371 916 A1**
(43) Date of publication of application: **05.10.2011**
(21) Application number: 09830129.4
(22) Date of filing: 05.11.2009
(51) Int. Cl.: C09J 7/02, C09J 11/04, C09J 11/06, C09J 133/00, C09J 201/00, H01L 31/04

(54) **DOUBLE-FACED PRESSURE-SENSITIVE ADHESIVE TAPE FOR SOLAR CELL MODULE**

(30) Priority: 04.12.2008 JP 2008310158; 04.12.2008 JP 2008310162
(71) Applicant: Nitto Denko Corporation, Ibaraki-shi Osaka 567-8680 (JP)
(72) Inventor: DAIGAKU, Noritsugu, Ibaraki-shi Osaka 567-8680 (JP); TAMAI, Hironori, Ibaraki-shi Osaka 567-8680 (JP); TAKAHASHI, Makoto, Ibaraki-shi Osaka 567-8680 (JP)
(74) Representative: Grünecker, Kinkeldey, Stockmair & Schwanhäusser Anwaltssozietät
(86) International application number: PCT/JP2009/005867
(87) International publication number: WO 2010/064358

(57) **Abstract**

Provided is a double-faced pressure-sensitive adhesive tape for solar cell modules superior in processability and workability during operations.

The double-faced pressure-sensitive adhesive tape for solar cell modules according to the present invention is a double-faced pressure-sensitive adhesive tape having a pressure-sensitive adhesive layer, **characterized in that** the frictional force, which is defined as the stress applied when a sample of 2 cmx2 cm in size having a 30 g load fixed is pulled on an aluminum plate in the horizontal direction at a speed of 300 mm/min, is 0.01 to 1.0 N/cm², on at least one face of the pressure-sensitive adhesive layer.

## Description

### [Technical Field]

The present invention relates to a double-faced pressure-sensitive adhesive tape for solar cell modules. More specifically, it relates to a double-faced pressure-sensitive adhesive tape for solar cell modules superior in processability and workability during operations.

### [Background Art]

Solar cell modules are produced by incorporating a solar panel (crystalline-silicon solar panel), which is prepared by sealing silicon cells formed on a glass plate for example with an ethylene-vinyl acetate (EVA) resin and installing a back sheet, into a frame (see Patent Document 1). Since solar cell modules are used outdoor, penetration of water into the panels should be avoided.

For example for prevention of penetration of water into panel, an foam sealing material is placed as it is compressed between the panel and the frame. In particular, a method of bonding an foam sealing material to the panel end and covering the top, bottom, and end faces of the region close to the panel end before installing the panel in frame (insertion into frame) is known as a method advantageous for automated bonding without protrusion of the sealing material (see Patent Document 2). However, such a method causes problems in processability because the foam sealing material is tacky.

### [Citation List]

### [Patent Literature]

Patent Document 1: Japanese Unexamined Patent Publication Application No. 2003-110128
Patent Document 2: Japanese Unexamined Patent Publication Application No. 2003-137611

### [Summary of Invention]

### [Technical Problem]

Accordingly, an object of the present invention is to provide a double-faced pressure-sensitive adhesive tape superior in processability and workability during operations such as covering of the top, bottom and end faces of the region close to the end of the panel for solar cell module and installation of the panel into a frame.

### [Solution to Problem]

After intensive studies to solve the problems above, the inventors have found that it is possible to improve the lubricity in the horizontal direction of a double-faced pressure-sensitive tape and the tackiness thereof in the thickness direction, by adjusting the frictional force on the surface of the pressure-sensitive adhesive layer (the pressure-sensitive adhesive face) in the horizontal direction in a particular range, and made the present invention.

Thus, the present invention provides a double-faced pressure-sensitive adhesive tape for solar cell modules having a pressure-sensitive adhesive layer, characterized in that the frictional force, which is defined as the stress applied when a sample of 2 cmx2 cm in size having a 30 g load fixed is pulled on an aluminum plate in the horizontal direction at a speed of 300 mm/min, is 0.01 to 1.0 N/cm², on at least one face of the pressure-sensitive adhesive layer.

The present invention also provides the double-faced pressure-sensitive adhesive tape for solar cell modules, wherein the pressure-sensitive adhesive layer is an acrylic pressure-sensitive adhesive layer.

The present invention also provides the double-faced pressure-sensitive adhesive tape for solar cell modules, wherein the acrylic polymer contained in the acrylic pressure-sensitive adhesive layer as base polymer has a (meth)acrylic alkyl ester with an alkyl group having 1 to 14 carbon atoms as its main monomer component.

The present invention also provides the double-faced pressure-sensitive adhesive tape for solar cell modules, wherein the content of the (meth)acrylic alkyl ester with an alkyl group having 1 to 14 carbon atoms of the acrylic polymer is 60 wt % or more with respect to the total amount of the monomer components for production of the acrylic polymer.

The present invention also provides the double-faced pressure-sensitive adhesive tape for solar cell modules, wherein the double-faced pressure-sensitive adhesive tape has a nonadhesive region at least on one face of the pressure-sensitive adhesive layer and the frictional force, which is defined as the stress applied when a sample of 2 cm×2 cm in size having a 30 g load fixed is pulled on an aluminum plate in the horizontal direction at a speed of 300 mm/min, is 0.01 to 1.0 N/cm², on at least one face of the pressure-sensitive adhesive layer.

The present invention also provides the double-faced pressure-sensitive adhesive tape for solar cell modules, wherein the area ratio of the pressure-sensitive adhesive region to the nonadhesive region on the face of the pressure-sensitive adhesive layer having the nonadhesive region, adhesive region/nonadhesive region, is 5/95 to 95/5.

The present invention also provides the double-faced pressure-sensitive adhesive tape for solar cell modules, wherein the nonadhesive region on the pressure-sensitive adhesive layer is a porous screen.

The present invention also provides the double-faced pressure-sensitive adhesive tape for solar cell modules, wherein the thickness of the porous screen is 10 to 500 µm.

The present invention also provides the double-faced pressure-sensitive adhesive tape for solar cell modules, wherein the basis weight of the porous screen is 1.0 to 80 g/m².

The present invention also provides the double-faced pressure-sensitive adhesive tape for solar cell modules, wherein the adhesive strength of the face of the pressure-sensitive adhesive layer having the nonadhesive region (180° peeling, against aluminum plate, tensile speed: 300 mm/minute) is 0.1 to 50 N/20 mm.

### [Advantageous Effects of Invention]

The double-faced pressure-sensitive adhesive tape for solar cell modules according to the present invention, which has the above-mentioned configuration, is superior in processability and workability during operations such as covering of the top, bottom and end faces of the panel close to the end and installation of the panel into the frame, in the solar cell module.

### [Brief Description of Drawings]

Figure 1 is a schematic top view illustrating a pressure-sensitive adhesive layer having a porous screen formed on one pressure-sensitive adhesive face.
Figure 2 is a schematic cross-sectional view taken along a line A-A, illustrating the pressure-sensitive adhesive layer having a porous screen formed on one pressure-sensitive adhesive face shown in Figure 1.
Figure 3 includes a schematic sectional view illustrating a state of a pressure-sensitive adhesive layer having a porous screen on one pressure-sensitive adhesive face in contact with a contactant in the non-pressurized state on the face where the porous screen is formed (3-1) and a schematic sectional view illustrating a state of a pressure-sensitive adhesive layer having a porous screen on one pressure-sensitive adhesive face in contact with a contactant in the pressurized state on the face where the porous screen is formed (3-2).
Figure 4 is a schematic sectional view showing the method of evaluating processability.

### [Description of Embodiments]

The double-faced pressure-sensitive adhesive tape for solar cell modules (double-sided pressure-sensitive adhesive tape for solar cell modules, double-faced adhesive tape for solar cell modules) according to the present invention is a double-faced pressure-sensitive adhesive tape having a pressure-sensitive adhesive layer, wherein the frictional force, which is defined as the stress applied when a sample of 2 cmx2 cm in size having a 30 g load fixed is pulled on an aluminum plate at a speed of 300 mm/min in the horizontal direction, is 0.01 to 1.0 N/cm², on at least one face of the acrylic pressure-sensitive adhesive layer. A pressure-sensitive adhesive face having such a frictional force shows both lubricity and tackiness.

The double-faced pressure-sensitive adhesive tape for solar cell modules according to the present invention normally has a nonadhesive region on the surface of the pressure-sensitive adhesive layer formed to make the pressure-sensitive adhesive layer have the frictional force and the properties described above. Thus preferably in the double-faced pressure-sensitive adhesive tape for solar cell modules according to the present invention, the double-faced pressure-sensitive adhesive tape has a nonadhesive region at least on one face of the pressure-sensitive adhesive layer and the frictional force, which is defined as the stress applied when a sample of 2 cmx2 cm in size having a 30 g load fixed is pulled on an aluminum plate in the horizontal direction at a speed of 300 mm/min, is 0.01 to 1.0 N/cm². The "nonadhesive region" means the region of the pressure-sensitive adhesive face other than the pressure-sensitive adhesive region, as will be described below.

The double-faced pressure-sensitive adhesive tape for solar cell modules according to the present invention may be a base-less type having no base (base layer) or a base-containing type having a base (base layer). In the present invention, the "double-faced pressure-sensitive adhesive tapes," when used, include sheet-shaped products, i.e., "double-faced pressure-sensitive adhesive sheets".

Examples of the double-faced pressure-sensitive adhesive tape for solar cell modules according to the present invention, when it is a base-less type, include a base-less double-faced pressure-sensitive adhesive tape having a pressure-sensitive adhesive layer having a frictional force in the horizontal direction in a particular range at least on one face.

Examples of the double-faced pressure-sensitive adhesive tape for solar cell modules according to the present invention, when it is a base-having type, is a base-containing double-faced pressure-sensitive adhesive tape at least having a base and a pressure-sensitive adhesive layer having a frictional force in the horizontal direction in a particular range, wherein the face having a frictional force in the horizontal direction in a particular range of the pressure-sensitive adhesive layer having a frictional force in the horizontal direction in a particular range is configured to provide at least one pressure-sensitive adhesive face, and the like.

### (Pressure-Sensitive Adhesive layer)

Any known adhesive (pressure-sensitive adhesive) may be used for the pressure-sensitive adhesive layer, and examples thereof include acrylic adhesives, rubber-based adhesives, vinyl alkylether-based adhesives, silicone-based adhesives, polyester-based adhesives, polyamide-based adhesives, urethane-based adhesives, fluorine-based adhesives, epoxy-based adhesives, and the like. In particular, rubber-based adhesives and acrylic adhesives are preferably, and acrylic adhesives are particularly preferable, from the point of adhesiveness.

The acrylic pressure-sensitive adhesive layer contains an acrylic polymer [in particular, an acrylic polymer employing a (meth)acrylic ester as the monomer component] as the base polymer (principal component). A (meth)acrylic alkyl ester (straight- or branched-chain alkyl group-containing (meth)acrylic alkyl ester) may be used preferably as the monomer component mainly constituting the acrylic polymer. Examples of the (meth)acrylic alkyl esters include (meth)acrylic alkyl esters with an alkyl group having 1 to 20 carbon atoms such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicosyl (meth)acrylate. In particular, preferably are (meth)acrylic alkyl esters with an alkyl group having 1 to 14 carbon atoms, and more preferable are (meth)acrylic alkyl esters with an alkyl group having 2 to 10 carbon atoms. The "(meth)acrylic esters" means "acrylic esters" and/or "methacrylic esters", and relative terms also have similar meanings.

Examples of the (meth)acrylic esters other than the (meth)acrylic alkyl esters above include alicyclic hydrocarbon group-containing (meth)acrylic esters such as cyclopentyl (meth)acrylate, cyclohexyl (meth)acrylate and isobornyl (meth)acrylate; aromatic hydrocarbon group-containing (meth)acrylic esters such as phenyl (meth)acrylate; and the like.

These (meth)acrylic esters may be used alone or in combination of two or more. The ratio of the (meth)acrylic ester [in particular, a (meth)acrylic alkyl ester], which is used as the main monomer component of the acrylic polymer, is preferably, for example 60 wt % or more, more preferably 80 wt % or more, with respect to the total amount of the monomer components for preparation of the acrylic polymer.

In preparation of the acrylic polymer, various copolymerizable monomers such as polar group-containing monomers and polyfunctional monomers may also be used as the monomer components. Use of copolymerizable monomers as the monomer components enables, for example, improvement in adhesive strength to the adherend and cohesive force of the adhesive. The copolymerizable monomers may be used alone or in combination of two or more.

Examples of the polar group-containing monomers include carboxyl group-containing monomers such as (meth)acrylic acid, itaconic acid, maleic acid, fumaric acid, crotonic acid, and isocrotonic acid or the anhydrides thereof (such as maleic anhydride); hydroxyl group-containing monomers such as hydroxyalkyl (meth)acrylate (in particular, hydroxyethyl (meth)acrylate, hydroxypropyl (meth)acrylate, and hydroxybutyl (meth)acrylate) amide group-containing monomers such as acrylamide, methacrylamide, N,N'dimethyl(meth)acrylamide, N-methylol(meth)acrylamide, N-methoxymethyl(meth)acrylamide, and N-butoxymethyl(meth)acrylamide; amino-group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate, and methyl glycidyl (meth)acrylate; cyano group-containing monomers such as acrylonitrile, and methacrylonitrile; heterocyclic ring-containing vinyl monomers such as N-vinyl-2-pyrrolidone, (meth)acryloylmorpholine, N-vinylpyridine, N-vinylpiperidone, N-vinylpyrimidine, N-vinylpiperazine, N-vinylpyrrole, N-vinylimidazole, and N-vinyloxazole; alkoxyalkyl (meth)acrylate-based monomers such as methoxyethyl (meth)acrylate, and ethoxyethyl (meth)acrylate; sulfonic acid group-containing monomers such as sodium vinylsulfonate; phosphoric acid group-containing monomers such as 2-hydroxyethyl acryloyl phosphate; imide group-containing monomers such as cyclohexylmaleimide and isopropylmaleimide; isocyanate group-containing monomers such as 2-methacryloyloxyethyl isocyanate, and the like. Carboxyl group-containing monomers such as acrylic acid or the anhydrides thereof are preferable as the polar group-containing monomers.

The amount of the polar group-containing monomer used is 30 wt % or less (e.g., 1 to 30 wt %), and preferably 3 to 20 wt %, with respect to the total amount of the monomer components for preparation of the acrylic polymer. A polar group-containing monomer content of more than 30 wt % may lead, for example, to excessively high cohesive force of the acrylic adhesive and deterioration in tackiness of the pressure-sensitive adhesive layer. Alternatively, an excessively low polar group-containing monomer content (e.g., less than 1 wt %) may prohibit the advantageous effects obtained by copolymerization of these monomers.

Examples of the polyfunctional monomers include hexanediol di(meth)acrylate, butanediol di(meth)acrylate, (poly)ethylene glycol di(meth)acrylate, (poly)propylene glycol di(meth)acrylate, neopentylglycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxyacrylate, polyester acrylate, urethane acrylate, and the like.

The amount of the polyfunctional monomer used is 2 wt % or less (for example, 0.01 to 2 wt %), and preferably 0.02 to 1 wt %, with respect to the total amount of the monomer components for preparation of the acrylic polymer. A polyfunctional monomer content of more than 2 wt % with respect to the total amount of the monomer components for preparation of the acrylic polymer may lead, for example, to excessively high cohesive force of the adhesive and deterioration in tackiness. Alternatively, excessively low polyfunctional monomer content (e.g., less than 0.01 wt %) may prohibit the advantageous effects obtained by copolymerization of these monomers.

Examples of the copolymerizable monomers other than the polar group-containing monomers and the polyfunctional monomers include vinyl esters such as vinyl acetate, and vinyl propionate; aromatic vinyl compounds such as styrene, and vinyltoluene; olefins or dienes such as ethylene, butadiene, isoprene, and isobutylene; vinylethers such as vinyl alkylether; vinyl chloride, and the like.

The adhesive may contain suitable additives as needed. For example, it may contain according to the kind of the base polymer, suitable additives such as crosslinking agents (such as polyisocyanate-based crosslinking agents, silicone-based crosslinking agents, epoxy-based crosslinking agents and alkyl-etherified melamine-based crosslinking agents), tackifiers (resins solid, semi-solid or liquid at room temperature such as rosin-derived resins, polyterpene resins, petroleum resins, and oil-soluble phenol resins), polymerization modifiers (such as lauryl mercaptan and thioglycol acids), plasticizers, fillers, aging inhibitors, and colorants (such as pigments and dyes). When the adhesive is an adhesive containing bubbles and/or hollow microspheres described below, fluorochemical surfactants are preferably added as additives. The amount of these additives added is not particularly limited, but preferably, for example 50 wt parts or less, and more preferably 10 wt parts or less, with respect to 100 wt parts of the total monomer components for preparation of the acrylic polymer.

In preparation of the acrylic polymer as base polymer in the adhesive, a curing reaction by heat or active-energy ray by using a polymerization initiator such as thermal polymerization initiator or photopolymerization initiator (photoinitiator) may be used. In particular for acceleration of polymerization and improvement in stability of the bubbles if contained, a active-energy ray curing reaction (photopolymerization) by using a photopolymerization initiator can be used preferably. The polymerization initiators may be used alone or in combination of two or more.

Examples of the thermal polymerization initiators include azo-based polymerization initiators [such as 2,2'-azobisisobutylonitrile, 2,2'-azobis-2-methylbutylonitrile, dimethyl 2,2'-azobis(2-methylpropionate), 4,4'-azobis-4-cyanovalerianic acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) bisulfate salt, and 2,2'-azobis(N,N'-dimethyleneisobutylamidine) dihydrochloride], peroxide-based polymerization initiators (such as dibenzoyl peroxide and tert-butyl permaleate), redox-based polymerization initiators, and the like. The amount of the thermal polymerization initiators used is not particularly limited, and may be in a range traditionally used for such thermal polymerization initiators.

Examples of the photopolymerization initiators for use include, but are not limited to, benzoin ether-based photopolymerization initiators, acetophenone-based photopolymerization initiators, α-ketol-based photopolymerization initiators, aromatic sulfonylchloride-based photopolymerization initiators, photoactive oxime-based photopolymerization initiators, benzoin-based photopolymerization initiators, benzyl-based photopolymerization initiators, benzophenone-based photopolymerization initiators, ketal-based photopolymerization initiators, thioxanthone-based photopolymerization initiators, and the like.

Specific examples of the benzoin ether-based photopolymerization initiators include benzoin methylether, benzoin ethylether, benzoin propylether, benzoin isopropylether, benzoin isobutylether, 2,2-dimethoxy-1,2-diphenylethan-1-one, anisole methylether, and the like. Examples of the acetophenone-based photopolymerization initiators include 2,2-diethoxyacetophenone, 2,2-dimethoxy-2-phenylacetophenone, 1-hydroxycyclohexylphenylketone, 4-phenoxydichloroacetophenone, 4-(t-butyl)dichloroacetophenone, and the like. Examples of the α-ketol-based photopolymerization initiators include 2-methyl-2-hydroxypropiophenone, 1-[4-(2-hydroxyethyl)phenyl]-2-methylpropan-1-one, and the like. Examples of the aromatic sulfonylchloride-based photopolymerization initiators include 2-naphthalenesulfonylchloride, and the like. Examples of the photoactive oxime-based photopolymerization initiators include 1-phenyl-1,1-propandione-2-(o-ethoxycarbonyl)-oxime, and the like.

The benzoin-based photopolymerization initiators include, for example, benzoin and the like. Examples of the benzyl-based photopolymerization initiators include benzyl and the like. Examples of the benzophenone-based photopolymerization initiators include benzophenone, benzoylbenzoic acid, 3,3'-dimethyl-4-methoxybenzophenone, polyvinylbenzopbenone, α-hydroxycyclohoxylphenylketone, and the like. Examples of the ketal-based photopolymerization initiators include benzyldimethyl ketal and the like. Examples of the thioxanthone-based photopolymerization initiators include thioxanthone, 2-chlorothioxanthone, 2-methylthioxanthone, 2,4-dimethylthioxanthone, isopropylthioxanthone, 2,4-diisopropylthioxanthone, dodecylthioxanthone, and the like.

The amount of the photopolymerization initiators used is not particularly limited, but may preferably be selected, for example, in the range of 0.01 to 5 wt parts (preferably 0.05 to 3 wt parts) with respect to 100 wt parts of the total monomer components for preparation of the acrylic polymer.

An active-energy ray is irradiated for activation of the photopolymerization initiator. Examples of the active-energy rays include ionizing radiation rays such as α ray, β ray, γ ray, neutron beam, and electron beam, ultraviolet ray and the like, and ultraviolet ray is particularly preferable. The irradiation energy and the exposure period of the active -energy ray for example are not particularly limited, if the photopolymerization initiator can be activated for reaction of the monomer components.

The pressure-sensitive adhesive layer preferably contains bubbles and/or hollow microspheres. Thus, the pressure-sensitive adhesive layer is preferably a bubble and/or hollow microsphere-containing pressure-sensitive adhesive layer (hereinafter, referred to as "bubble-containing pressure-sensitive adhesive layer"). If it contains at least bubbles and/or hollow microspheres, it shows sealing and water-blocking properties improved by repulsion stress, when it is fixed as compressed in a solar cell module. In the present invention, the pressure-sensitive adhesive layer is preferably an acrylic pressure-sensitive adhesive layer and thus, a bubble-containing acrylic pressure-sensitive adhesive layer is used favorably.

The amount of the bubbles possibly contained in the pressure-sensitive adhesive layer, for example, in the bubble-containing acrylic pressure-sensitive adhesion layer, may be selected properly in the range that does not damage adhesiveness, lubricity and others, but normally is 5 to 50 vol % (preferably 10 to 40 vol %, more preferably 12 to 30 vol %) with respect to the total volume of the bubble-containing acrylic pressure-sensitive adhesive layer. A bubble content of less than 5 vol % may lead to unfavorable stress relaxation efficiency, making it difficult to show the sealing and water-blocking properties by repulsion stress when it is fixed as compressed. Alternatively, a content of more than 50 vol % may lead to generation of bubbles penetrating the pressure-sensitive adhesive layer, which in turn leads to deterioration in adhesiveness and excessive softening of the bubble-containing acrylic pressure-sensitive adhesive layer.

The bubbles mixed in the pressure-sensitive adhesive layer are desirably, fundamentally independent bubbles, but may be a mixture of independent bubbles and semi-closed bubbles.

Such a bubble usually has a spherical shape, but may have an irregular spherical shape. The average air bubble diameter of the bubbles is not particularly limited, and can be selected properly, for example, in the range of 1 to 1000 µm (preferably 10 to 500 µm, more preferably 30 to 300 µm).

The gas component contained in the bubbles (gas component forming the bubbles, which will be referred to as "bubble-forming gas") is not particularly limited, and various gas components including inert gases (such as nitrogen, carbon dioxide, and argon) and air can be used. If a reaction, such as polymerization reaction, is carried out after mixing with the bubble-forming gas, it is important to use a bubble-forming gas that is inert to the reaction. The bubble-forming gas is preferably nitrogen, from the viewpoints of reaction inhibition and production cost.

In the present invention, it is possible, for example, to improve tensile strength, bending strength and impact strength and also processability, by using hollow microspheres as a component for the pressure-sensitive adhesive layer. The hollow microspheres may be used alone or in combination of two or more.

The hollow microsphere may be a hollow inorganic microsphere or a hollow organic microsphere. Specific examples of the hollow inorganic microspheres among the hollow microspheres include hollow balloons of glass such as hollow glass balloons; hollow balloons of metallic compound such as hollow alumina balloons; hollow balloons of ceramic such as hollow ceramic balloons; and the like. Alternatively, examples of the hollow organic microspheres include hollow balloons of a resin such as hollow acrylic balloons, hollow vinylidene chloride balloons, and the like.

The particle diameter of the hollow microspheres (average particle diameter) is not particularly limited, but can be selected, for example, in the range of 1 to 500 µm (preferably 5 to 200 µm, more preferably 10 to 100 µm).

The specific density of the hollow microspheres is not particularly limited, but can be selected, for example, in the range of 0.1 to 0.8 g/cm³ (preferably 0.12 to 0.5 g/cm³). Hollow-microspheres having a specific density of less than 0.1 g/cm³ make it difficult to mix and disperse the hollow microspheres uniformly, because of increased floating, while those having a density larger than 0.8 g/cm³ are more expensive and raise the production cost.

The amount of the hollow microspheres used is not particularly limited, but can be selected, for example, in the range of 5 to 50 capacity % (vol %), preferably 10 to 50 capacity %, and more preferably 15 to 40 capacity %, with respect to the total volume of the pressure-sensitive adhesive layer (in particular, bubble containing acrylic pressure-sensitive adhesive layer). When the hollow microspheres are used in an amount of less than 5 capacity %, the advantageous effects obtained by adding the hollow microspheres may become decreased, while when the microspheres are used in an amount of more than 50 capacity %, the adhesive strength may be deteriorated.

The pressure-sensitive adhesive composition for preparation of the pressure-sensitive adhesive layer for use in the present invention, for example, acrylic pressure-sensitive adhesive layer, can be prepared by mixing monomer components for preparation of the acrylic polymer (such as (meth)acrylic esters), polymerization initiators, various additives and others by a known method. Alternatively, the monomer components may be partially polymerized, for example, for viscosity adjustment, as needed. The pressure-sensitive adhesive composition is prepared, for example, according to the following procedure of: (i) preparing a monomer mixture by mixing the monomer components for forming the base polymer (such as (meth)acrylic esters and other copolymerizable monomers) with photopolymerization initiators, (ii) preparing a composition (sirup or sirup-like composition) wherein only part of the monomer components are polymerized by photopolymerization (for example, ultraviolet polymerization) of the monomer mixture, and then, (iii) blending the obtained sirup with hollow microspheres, fluorochemical surfactants and other additives, as needed, and further, if the adhesive contains bubbles (iv), supplying and mixing bubbles with the blend obtained in (iii), to give a bubble-containing adhesive composition. The method of producing the bubble-containing pressure-sensitive adhesive composition is not limited thereto, and, for example, a method of blending the monomer mixture with fluorochemical surfactants, and hollow microspheres during preparation of the sirup may be used.

If bubbles are to be contained, it is preferable for stabilized dispersion of bubbles in the pressure-sensitive adhesive layer during mixing, for example, to add bubbles to and mix them in the pressure-sensitive adhesive composition as the final component, as in the production method described above. It is also preferable for stabilized mixing of bubbles to raise the viscosity of the blend (for example, the blend obtained in (iii)) before bubble mixing. The viscosity of the blend before bubble mixing is not particularly limited, but preferably, for example, 5 to 50 Pa·s, and more preferably 10 to 40 Pa·s (as determined by using a BH viscometer, rotor: No.5 rotor, rotational frequency: 10 rpm, measurement temperature: 30°C). A viscosity of less than 5 Pa·s may result in coalescence and disappearance of the mixed bubbles in the system because of excessively low viscosity, while a viscosity of more than 50 Pa·s may result in difficulty in forming the pressure-sensitive layer by coating because of excessively high viscosity. The viscosity can be adjusted, for example, by a method of blending various polymer components such as acrylic rubbers and thickeners or by a method of polymerizing part of the monomer components for the base polymer.

The method of mixing bubbles in preparation of the bubble-containing pressure-sensitive adhesive composition is not particularly limited, and any known bubble mixing method may be used. An example of the apparatus is an apparatus including a stator having many fine gears on a circular plate having a through hole in the center, and a rotor facing the gears-equipped stator and having small gears on a circular plate similarly to the stator. The blend for bubble mixing is fed into the space between the gears of stator and those of the rotor in the apparatus; and a bubble-forming gas component (bubble-forming gas) is supplied through the through-hole, while the rotor is rotated at high speed, to give a bubble-containing pressure-sensitive adhesive composition in which the bubble-forming gas is finely dispersed and mixed.

For reduction or prevention of coalescence of bubbles, the operations from bubble mixing to formation of the pressure-sensitive adhesive layer are preferably carried out continuously in a series of steps. Specifically, it is preferable, after the bubble-containing pressure-sensitive adhesive composition is prepared by bubble mixing as described above, to form a pressure-sensitive adhesive layer by using the pressure-sensitive adhesive composition.

The pressure-sensitive adhesive layer is formed by forming a coated film by applying the pressure-sensitive adhesive composition on a suitable substrate and curing the layer (for example, photocuring by irradiation of active-energy ray).

The thickness of the pressure-sensitive adhesive layer is not particularly limited, but preferably, for example, 100 to 3000 µm, more preferably 400 to 2000 µm, and still more preferably 400 to 1200 µm, A thickness of less than 100 µm may lead to deterioration in adhesiveness, while a thickness of more than 3000 µm to difficulty in installation in module.

### (Nonadhesive region)

In the present invention, the nonadhesive region is a region formed at least on one face of the pressure-sensitive adhesive layer where it dose not have tackiness (pressure-sensitive adhesiveness), i.e., a region on the pressure-sensitive adhesive face other than the pressure-sensitive adhesive region. The pressure-sensitive adhesiveness is suppressed on the pressure-sensitive adhesive face having the nonadhesive region and the pressure-sensitive adhesive layer shows both favorable tackiness in the thickness direction (thickness direction of the pressure-sensitive adhesive layer) and favorable lubricity in the horizontal direction (direction vertical to the thickness direction of pressure-sensitive adhesive layer).

The reason for the fact of the pressure-sensitive adhesive layer having a nonadhesive region showing such properties in the present invention is that the nonadhesive region is protruding out of the pressure-sensitive adhesive layer surface, as part of the nonadhesive region is embedded in the pressure-sensitive adhesive layer, inhibiting contact of the pressure-sensitive adhesive layer surface with the contactant (object of contact, adherend) in the unpressurized state, while the nonadhesive region is embedded in the pressure-sensitive adhesive layer completely, leading to deformation of the pressure-sensitive adhesive layer and thus contact of the pressure-sensitive adhesive layer with the contactant in the pressurized state (when in contact with the contactant at sufficiently high contact pressure). In the pressurized state, the nonadhesive region itself may also be subjected to compressive deformation, but the compressive deformation of the nonadhesive region may also make it easier for the pressure-sensitive adhesive layer to contact therewith.

The degree of embedment of the nonadhesive region in the unpressurized and pressurized states is not particularly limited, if the pressure-sensitive adhesive layer shows the properties above.

Examples of the methods of forming a nonadhesive region at least on one face of the pressure-sensitive adhesive layer include lamination of a porous screen to the pressure-sensitive adhesive layer surface (adhesive face), deposition of a powdery material (powder) on the pressure-sensitive adhesive layer surface, partial non-adhesive coating on the pressure-sensitive adhesive layer surface and the like. In particular, in the present invention, it is preferable to laminate a porous screen to the pressure-sensitive adhesive layer surface (adhesive face) for accurate control of the balance between the tackiness in the thickness direction and the lubricity in the horizontal direction and also from the points of productivity, equipment, and cost.

In the present invention, the porous screen as the nonadhesive region is a screen to be laminated to the pressure-sensitive adhesive layer surface (adhesive face), and the pressure-sensitive adhesiveness is controlled on the pressure-sensitive adhesive face having the laminated porous screen and thus, the pressure-sensitive adhesive face shows both the tackiness in the thickness direction (thickness direction of the pressure-sensitive adhesive layer) and the lubricity in the horizontal direction (direction vertical to the thickness direction of the pressure-sensitive adhesive layer).

The porous screen is a screen that is porous, i.e., a porous (or pore-containing) sheet-shaped product. The porous screens also include mesh product in the present invention.

Specific examples of the porous screens include, but are not limited to, nets (mesh products such as plastic nets, fiber nets, and metal fiber nets), woven fabrics, nonwoven fabrics, paper, and the like. Alternatively for example, plastic sheets with pores, thin metal sheets with pores, woven fabrics with pores, nonwoven fabrics with pores, and paper with pores (referred to as "pore-containing sheets") may be used. In particular, nets and pore-containing sheets are preferable, and particularly, nets are preferable.

The shape of the pore or the mesh of the porous screen is not particularly limited, if the property above is exhibited, but, for example, triangular, quadrangular (e.g., square, rectangle, rhombus, or trapezoid), circular (e.g., perfect circle, nearly perfect circle, or ellipse), or the like. Alternatively, it may be an undefined shape similar to the shape above. All of the shapes of the pores or the networks may be the same as or different from each other.

The thickness of the porous screen is not particularly limited, if the properties above are shown, but preferably, for example 10 to 500 µm, and more preferably 50 to 150 µm. A thickness of less than 10 µm may lead to decrease in lubricity, while a thickness of more than 500 µm may lead to fail to secure adhesiveness and lubricity at the same time.

The raw material for the porous screen when it is a net is not particularly limited, but may be a synthetic resin (plastic) such as nylon, polyethylene, polypropylene, or polyester, a natural fiber, a metal fiber, or the like.

The basis weight of the porous screen is not particularly limited, but, preferably 1.0 to 80 g/m², more preferably 1.0 to 50 g/m², still more preferably 2.0 to 20 g/m², for improvement both in adhesiveness and lubricity on the pressure-sensitive adhesive face to which the porous screen is laminated.

The size of the mesh is not particularly limited, but preferably 5 pieces/inch to 50 pieces/inch, and more preferably 20 pieces/inch to 40 pieces/inch, for improvement both in adhesiveness and lubricity on the pressure-sensitive adhesive face to which the porous screen is laminated.

Examples of commercially available nets include "Net ND20" (trade name, produced by Daisen Co., Ltd.) and the like.

The raw material for the porous screen when it is a pore-containing sheet is not particularly limited, but preferably a plastic or a nonwoven fabric, for improvement both in adhesiveness and lubricity on the pressure-sensitive adhesive face to which the porous screen is laminated.

The size of the pores in the porous screen is not particularly limited if the properties above are exhibited, and the sizes of the pores may be the same or different from each other. The pore size in the largest pore region is, for example, approximately 500 µm to 10 mm.

Distribution of the pores in the porous screen is not particularly limited if the properties above are exhibited, and the pores may be formed in clumps in a particular region or as dispersed in the entire porous screen.

The distance between the pores of the porous screen is not particularly limited, and may or may not be constant.

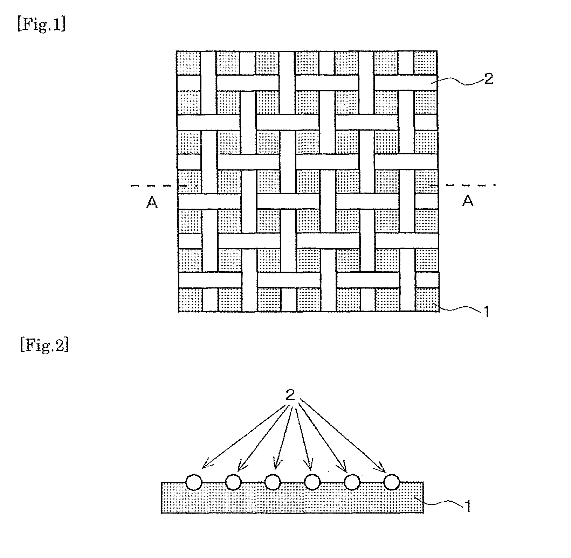

In the present invention, the porous screen-laminated pressure-sensitive adhesive face of the pressure-sensitive adhesive layer is superior both in tackiness and lubricity. More specifically, the pressure-sensitive adhesive layer having a porous screen shows tackiness in the thickness direction, while the pressure-sensitive adhesive layer having a porous screen shows lubricity in the horizontal direction (direction vertical to the thickness direction). Hereinafter, the properties will be described with reference to Figures 1, 2, and 3. A porous screen having square network is shown as the porous screen in Figures 1, 2 and 3, but the shape of the network is not limited to the square shape.

Figure 1 is a schematic top view illustrating a pressure-sensitive adhesive layer having a porous screen on one pressure-sensitive adhesive face, and Figure 2 is schematic crosssectional view illustrating the pressure-sensitive adhesive layer having a porous screen on one pressure-sensitive adhesive face shown in Figure 1, as seen along a line A-A cross section. In Figures 1 and 2, a reference numeral 1 represents a pressure-sensitive adhesive layer, and 2 represents a porous screen. The tape shown in Figures 1 and 2 is also a base-less-type double-faced pressure-sensitive adhesive tape made only of a pressure-sensitive adhesive layer having a porous screen only on one pressure-sensitive adhesive face.

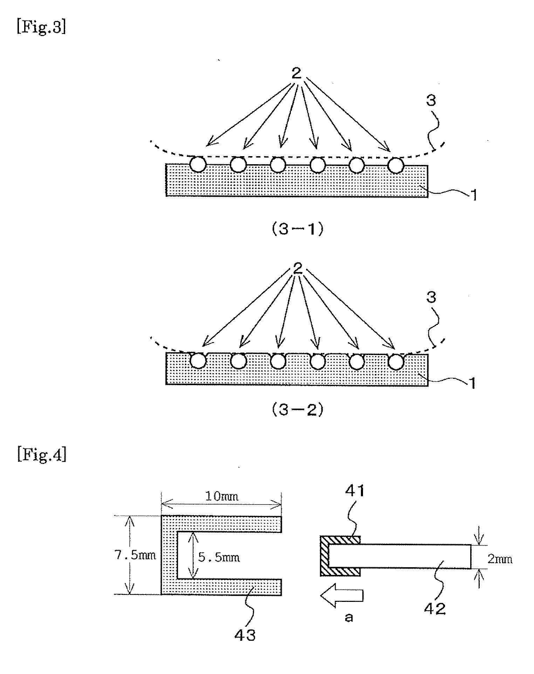

Figure 3 includes a schematic sectional view illustrating a state of a pressure-sensitive adhesive layer having a porous screen on one pressure-sensitive adhesive face in contact with a contactant in the non-pressurized state on the face where the porous screen is formed (3-1), and a schematic sectional view illustrating a state of a pressure-sensitive adhesive layer having a porous screen on one pressure-sensitive adhesive face in contact with a contactant in the pressurized state on the face where the porous screen is formed (3-2). In Figure 3, a reference numeral 1 represents a pressure-sensitive adhesive layer; 2 represents a porous screen; and 3 represents a contactant.

The pressure-sensitive adhesive face laminated with the porous screen shows above-mentioned properties, because part of the porous screen 2 is embedded into the pressure-sensitive adhesive layer 1 in the unpressurized state (see Figure 2. about half of the porous screen is embedded in Figure 2) and thus, the porous screen 2 remains protruded on the surface of the pressure-sensitive adhesive layer 1, inhibiting contact of the contactant 3 onto the surface of pressure-sensitive adhesive layer 2 (see Figure 3(3-1)). On the other hand, the porous screen 2 is deeply embedded into the pressure-sensitive adhesive layer 1 in the pressurized state (in which the contactant 3 is in contact under sufficiently high contact pressure), and thus, the pressure-sensitive adhesive layer 1 is deformed and the porous screen 2 is also deformed under compression. This makes part of the pressure-sensitive adhesive layer 1 protrude through the porous screen 2, and the part of the pressure-sensitive adhesive layer 1 penetrating through the porous screen 2 come in contact with the contactant 3 (see Figure 3(3-2)).

The degree of the embedment of the porous screen in the unpressurized state and the pressurized state is not particularly limited, if the properties are exhibited.

The powdery material used in the nonadhesive region is a non-tacky substance to be fixed on the pressure-sensitive adhesive layer. The pressure-sensitive adhesive face having the powdery material has controlled pressure-sensitive adhesiveness and well-balanced tackiness in the thickness direction and lubricity in the horizontal direction. The powdery materials may be used alone or in combination of two or more.

The reason for the fact of the pressure-sensitive adhesive layer having the powdery material showing such properties is that the powdery material is protruding out of the pressure-sensitive adhesive layer surface, as part of the powdery material is embedded in the pressure-sensitive adhesive layer, inhibiting contact of the pressure-sensitive adhesive layer surface with the contactant in the unpressurized state, while the powdery material is embedded in the pressure-sensitive adhesive layer completely, leading to deformation and protuberance of the pressure-sensitive adhesive layer and thus contact of the pressure-sensitive adhesive layer with the material to be adhered in the pressurized state.

The degree of the embedment of the powdery material in the unpressurized and pressurized states is not particularly limited, if the properties are exhibited.

Examples of the powdery materials include inorganic particles such as of silica, silicones (silicone powders), calcium carbonate, clay, titanium oxide, talc, layered silicate salt, clay mineral, metal powders, glass, glass beads, glass balloons, alumina balloons, ceramic balloons, titanium white, and carbon black; polymer particles such as of polystyrene, polymethyl methacrylate, phenol resins, benzoguanamine resins, urea resins, silicone resins, nylon, polyester, polyurethane, polyethylene, polypropylene, polyamide, and polyimide; and the like. These particles may be solid particles or hollow particles (balloons).

The shape of the powdery material is not particularly limited, if the properties are exhibited, and may be, for example, spherical, prismatic, irregularly shaped or the like.

The particle diameter (average particle diameter) of the fine particles is not particularly limited, if the properties are exhibited, but, for example, 1 µm to 2000 µm, preferably 5 µm to 1000 µm.

The method of depositing the powdery material on the pressure-sensitive adhesive layer is not particularly limited, but, for example, spraying of the powdery material on the pressure-sensitive adhesive layer surface and the like.

The non-adhesive coating used in the nonadhesive region means a coat layer (non-adhesive coating layer) partially formed on the pressure-sensitive adhesive layer. The pressure-sensitive adhesive face having a non-adhesive coating partially formed has controlled pressure-sensitive adhesiveness and both well-balanced tackiness in the thickness direction and lubricity in the horizontal direction.

The non-adhesive coating on the pressure-sensitive adhesive layer can be carried out by using a known coating method.

The shape of the non-adhesive coating is not particularly limited, if the properties are exhibited, and may be a shape in which most of the pressure-sensitive adhesive layer surface is non-adhesive coated or a shape in which only part of the pressure-sensitive adhesive layer surface is non-adhesive coated.

The thickness of the non-adhesive coating (non-adhesive coating layer) is not particularly limited, if the properties are exhibited, and for example, preferably 10 to 500 µm, more preferably 50 to 150 µm. A thickness of less than 10 µm may lead to deterioration in lubricity, while a thickness of more than 500 µm may prohibit favorable balance of adhesiveness and lubricity.

The resin used for the non-adhesive coating is not particularly limited, and any known resin may be used. Resins favorably used include fluorine resins such as polytetrafluoroethylene; silicone resins such as silicone rubbers; olefinic resins such as polyethylene and polypropylene; and the like. The resins for non-adhesive coating may be used alone or in combination of two or more.

The area ratio of the pressure-sensitive adhesive region to nonadhesive region [for example, the area ratio of the pressure-sensitive adhesive region to the net region when a net is used as the porous screen], on the pressure-sensitive adhesive face of the pressure-sensitive adhesive layer having nonadhesive region (e, g., a porous screen) is preferably 5/95 to 95/5, and more preferably 10/90 to 90/10, for improvement both in adhesiveness and lubricity.

In determining the area ratio of the pressure-sensitive adhesive region to the nonadhesive region, the face having the nonadhesive region (20 mm ×20 mm) is copied as expanded (e.g., by about 16 times), and the pressure-sensitive adhesive region and the nonadhesive region are divided from the obtained copy with scissors. The area ratio was determined by measuring the weights of the sample fractions thus separated and by calculation with the resulting weight ratio.

In the present invention, the frictional force, which is defined as the stress applied when a sample of 2 cmx2 cm in size having a 30 g load is pulled on an aluminum plate ("SK-AAluminum Plate 1050P", trade name, manufactured by Sumitomo Light Metal Industires) in the horizontal direction at a speed of 300 mm/min, on at least one side of the pressure-sensitive adhesive layer, is 0.01 to 1.0 N/cm², and preferably 0.01 to 0.5 N/cm². A frictional force of more than 1.0 N/cm² may lead to generation of troubles caused by unfavorable in lubricity.

In the present invention, it is preferable to control the pressure-sensitive adhesiveness by forming a nonadhesive region (e.g., by laminating a porous screen) and the frictional force in a particular range, by improving the lubricity in the horizontal direction of the face having the nonadhesive region (e.g., porous screen-laminated pressure-sensitive adhesive face). It is thus important that the frictional force, which is defined as the stress applied when a sample of 2 cm×2 cm in size having a 30 g load fixed to the pressure-sensitive adhesive layer is pulled, as the nonadhesive region-having face [nonadhesive region-sided face (e.g., porous screen-sided face)] is placed on an aluminum plate, in the horizontal direction at a speed of 300 mm/min, is in the range above.

Also in the present invention, the adhesive strength of the nonadhesive region-having face (e.g., porous screen-laminated adhesive face) (180° peeling, against aluminum plate, tensile speed: 300 mm/minute) is not particularly limited, but, preferably 0.1 to 50 (N/20 mm), more preferably 0.1 to 20 (N/20 mm), and still more preferably 0.2 to 10 (N/20 mm), for improvement both in adhesiveness and lubricity.

Thus, a double-faced pressure-sensitive adhesive tape having a pressure-sensitive adhesive layer, wherein the frictional force, which is defined as the stress applied when a sample of 2 cmx2 cm in size having a 30 g load is pulled on an aluminum plate in the horizontal direction at a speed of 300 mm/min, is 0.01 to 1.0 N/cm² and the adhesive strength (180° peeling, against aluminum plate, tensile speed: 300 mm/minute) is 0.1 to 50 (N/20 mm), on at least one face of the pressure-sensitive adhesive layer, is superior both in lubricity and tackiness on the pressure-sensitive adhesive face.

### (Release liner)

The pressure-sensitive adhesive face (pressure-sensitive adhesive layer surface) of the double-faced pressure-sensitive adhesive tape for solar cell modules according to the present invention may be protected with a release liner (separator, separation film) before use. The pressure-sensitive adhesive faces of the double-faced pressure-sensitive adhesive tape may be protected respectively with two release liners or with a single release liner having separation faces on both faces as it is wound in the roll shape. The release liner that is used as a protective material for the pressure-sensitive adhesive layer is removed before the tape is bonded to the adherend.

Such a release liner is not particularly limited, and any traditional release paper or the like may be used, and examples thereof for use include bases having a release-coating layer, low-adhesive bases of a fluorochemical polymer, low-adhesive bases of a non-polar polymer, and the like. Examples of the release-coating bases include plastic films, papers and others that are surface-treated with a release coating agent such as a silicone-based, long-chain alkyl-based, or fluorine-based agent or molybdenum sulfide. Examples of the low-adhesive bases of a fluorochemical polymer include polytetrafluoroethylene, polychloro-trifluoroethylene, polyvinyl fluoride, polyvinylidene fluoride, tetrafluoroethylene-hexafluoropropylene copolymers, chlorofluoroethylene-vinylidene fluoride copolymers and the like. Examples of the non-polar polymers for the low-adhesive bases of non-polar polymer include olefinic resins (such as polyethylene and polypropylene) and the like. The release liner can be prepared by a known and traditional method. In addition, the thickness and others of the release liner are also not particularly limited.

### (Other layers)

The double-faced pressure-sensitive adhesive tape for solar cell modules according to the present invention may contain other layers (such as intermediate layer and undercoat layer) in the range that does not impair the advantageous effects of the invention.

### (Base)

The base for the double-faced pressure-sensitive adhesive tape for solar cell modules according to the present invention when it is a base-containing type is not particularly limited, and examples thereof for use include thin-film products including paper bases such as paper; fiber bases such as woven fabric, nonwoven fabric and net (the raw material is not particularly limited and may be selected properly from manila hemp, rayon, polyester, pulp fiber and others); metal bases such as metal foil and metal plate; plastic bases such as plastic film and sheet; rubber bases such as rubber sheet; foam bases such as foam sheet; the laminated films thereof (such as laminate films of a plastic base and another base, and those of plastic films (or sheets)) and the like. A plastic base such as plastic film or sheet can be used preferably as the base. Examples of the raw materials for the plastic film and sheet include olefinic resins prepared from an α-olefin as the monomer component such as polyethylene (PE), polypropylene (PP), ethylene-propylene copolymers and ethylene-vinyl acetate copolymers (EVA); polyester resins such as polyethylene terephthalate (PET), polyethylene naphthalate (PEN), and polybutylene terephthalate (PBT); polyvinyl chloride (PVC); vinyl acetate resins; polyphenylene sulfide (PPS); amide resins such as polyamides (nylon) and wholly aromatic polyamides (aramides); polyimide resins; polyether ether ketone (PEEK) and the like. These raw materials may be used alone or in combination of two or more.

When a plastic base is used as the base, deformation, such as elongation, thereof may be controlled for example by stretching treatment. When the pressure-sensitive adhesive layer is formed by curing by active-energy ray irradiation, a base that does not inhibit transmission of the active-energy ray is used preferably as the base.

For improvement in adhesiveness of the base to the pressure-sensitive adhesive layer, the surface of the base may be oxidized by a common chemical or processed by a physical surface treatment method such as corona treatment, chromic acid treatment, ozone exposure, flame exposure, active-pressure electric shock exposure, or ionizing radiation treatment, and may also be coated, for example, with an undercoat agent and a release coating agent.

The thickness of the base varies according to the desired strength, flexibility, and intend purpose thereof, but is generally about 1000 µm or less (e.g., 1 to 1000 µm), preferably 1 to 500 µm, and more preferably 3 to 300 µm, although it is not limited thereto. The base may be in any shape, single-layered or multi-layered.

The method of producing the double-faced pressure-sensitive adhesive tape for solar cell modules according to the present invention is not particularly limited, but for example, the double-feced pressure-sensitive adhesive tape having a pressure-sensitive adhesive layer having a nonadhesive region (e.g., porous screen-laminated pressure-sensitive adhesive layer) can be prepared by obtaining a pressure-sensitive adhesive layer according to a known and traditional method and forming the nonadhesive region (for example, laminating a porous screen) on the surface of the pressure-sensitive adhesive layer.

More specifically, the base-less type of double-faced pressure-sensitive adhesive tape made only of a pressure-sensitive adhesive layer having a nonadhesive region (e.g., pressure-sensitive adhesive layer having a porous screen) can be prepared, for example, by preparing a pressure-sensitive adhesive layer according to a known and traditional method, and forming the nonadhesive region (e.g., porous screen) on the surface of the pressure-sensitive adhesive layer.

Alternatively, a base-containing double-faced pressure-sensitive adhesive tape having of a pressure-sensitive adhesive layer having a nonadhesive region (e.g., porous screen), a pressure-sensitive adhesive layer not having a nonadhesive region (e.g., porous screen), and a base can be prepared by forming a pressure-sensitive adhesive layer on one side of a base according to a known and traditional method, forming the nonadhesive region on the surface of the pressure-sensitive adhesive layer (e.g., laminating a porous screen to the surface of the pressure-sensitive adhesive layer), thus forming a pressure-sensitive adhesive layer having a nonadhesive region (e.g., porous screen), and additionally forming a pressure-sensitive adhesive layer not having a nonadhesive region (e.g., porous screen) on the other side of the base according to a known and traditional method.

The double-faced pressure-sensitive adhesive tape for solar cell modules according to the present invention exhibits both preferable lubricity and tackiness on the pressure-sensitive adhesive face controlled in frictional force (e.g., surface of the pressure-sensitive adhesive layer having a nonadhesive region, for example, as laminated with a porous screen).

Due to the properties above, i.e., the lubricity on the pressure-sensitive adhesive face where the frictional force is controlled, the double-faced pressure-sensitive adhesive tape for solar cell modules according to the present invention can be used in certain bonding applications wherein the tape is desirably not bonded to a particular adherend in the undesired region because of lubricity but bonded to it only in the desired region because of tackiness.

For example, it is possible to use a double-faced pressure-sensitive adhesive tape made only of a pressure-sensitive adhesive layer with one pressure-sensitive adhesive face laminated with a porous screen and the other pressure-sensitive adhesive face not laminated with a porous screen, to bond the double-faced pressure-sensitive adhesive tape onto one member such that the pressure-sensitive adhesive face of the double-faced pressure-sensitive adhesive tape that is not laminated with a porous screen is in contact with the member, and then to bond the member having the bonded double-faced pressure-sensitive adhesive tape mainly onto the bottom of the dent in the other dent-containing member. Thus, the one member can be bonded to the dent of the other dent-containing member at high-processability. It is because, in the member bonded to the pressure-sensitive adhesive face of the double-faced pressure-sensitive adhesive tape unlaminated with a porous screen, the pressure-sensitive adhesive layer laminated with a porous screen is exposed, and the pressure-sensitive adhesive layer does not penetrate the porous screen, showing lubricity, in the unpressurized state (when the contact pressure is low) on the pressure-sensitive adhesive face laminated with the porous screen, even if the pressure-sensitive adhesive face is brought into contact with the member outside the desired region.

It is possible by using the double-faced pressure-sensitive adhesive tape for solar cell modules according to the present invention for example, to cover the top, bottom, and end faces close to the panel end before installation of the panel into the frame at high processability and workability during production of solar cell modules. In addition, the pressure-sensitive adhesive tape can be present in the compressed state after production of the solar cell module, and thus, shows better water-blocking property, if it has the bubble structure, and can prevent penetration of water into the panel. For that reason, the present invention can be used preferably in production of solar cell modules.

### [Examples]

Hereinafter, the present invention will be described more in detail with reference to Examples, but it should be understood that the present invention is not restricted at all by these Examples.

### (Usage example of nonadhesive region 1)

The porous screen used was a plastic net ("Net ND20," trade name, manufactured by Daisen Co., Ltd., thickness: 110 µm, knitted, basis weight: 6.6 g/m², pore number: 23 pieces/inch vertically and 39 pieces/inch horizontally).

### (Usage example of nonadhesive region 2)

The porous screen used was a porous nonwoven fabric ("Porous Nonwoven Fabric of Special Mesh Paper A" (manufactured by NIPPON PAPER PAPYLIA Co., Ltd.), thickness: 70 µm, hole shape: circular, hole diameter: 4 mmϕ, basis weight: 16 g/m²).

### (Usage example of nonadhesive region 3)

The porous screen used was a porous nonwoven fabric ("Porous Nonwoven Fabric of Special Mesh Paper B" (manufactured by NIPPON PAPER PAPYLIA Co., Ltd.), thickness: 60 µm, hole shape: circular, hole diameter: 3 mmϕ, basis weight: 16 g/m²).

### (Example 1)

A photopolymerization initiator ["Irgacure 651", trade name (manufactured by Ciba Japan)]: 0.05 wt part and a photopolymerization initiator ["Irgacure 184", trade name (manufactured by Ciba Japan)]: 0.05 wt part were blended with a monomer mixture containing 2-ethylhexyl acrylate: 90 wt parts and acrylic acid: 10 wt parts as the monomer components, and ultraviolet ray was irradiated until the viscosity of the mixture (as determined by a BH viscometer, No.5 rotor, 10 rpm, measurement temperature: 30°C) reached approximately 15 Pa·s, to give a partially polymerized composition (partial polymer, sirup). A photopolymerization initiator ["Irgacure 651", trade name (manufactured by Ciba Japan)]: 0.04 wt part, 1,6-hexanediol diacrylate: 0.1 wt part, and a surfactant ["MEGAFACE F-477", trade name, manufactured by DIC Corporation]: 0.7 wt part, and carbon black: 0.02 wt part were added to the sirup: 100 wt parts. In addition, hollow glass balloons ("CEL-STAR Z-27", trade name, manufactured by Tokai Kogyo Co., Ltd.) were added to the sirup at a ratio of 30 capacity % with respect to the entire volume, to give an adhesive precursor. The entire volume of the hollow glass balloons in the adhesive precursor was approximately 23 capacity % with respect to the entire volume of the adhesive precursor. Nitrogen was introduced into the adhesive precursor for generation of bubbles, by using an apparatus equipped with a stator having many fine gears on a circular plate having a through hole in the center, and a rotor facing the gears-equipped stator and having fine gears on a circular plate similarly to the stator. Nitrogen was supplied until the amount of the bubbles mixed became approximately 15 capacity % with respect to the entire volume of the liquid extruded, to give a bubble-containing pressure-sensitive adhesive composition.
The bubble-containing pressure-sensitive adhesive composition was fed into a wet-lamination roll coater through a tube (diameter: 19 mm, length: approximately 1.5 m), and the bubble-containing pressure-sensitive adhesive composition was coated between the release-coating faces of two polyethylene terephthalate bases release-coated on one face, to a thickness after drying and curing of 1.2 mm. In other words, the bubble-containing pressure-sensitive adhesive composition was held between the polyethylene terephthalate bases.
Ultraviolet ray at an illuminance of 5 mW/cm² was then irradiated from both sides for 4 minutes, curing the bubble-containing pressure-sensitive adhesive composition, to give a pressure-sensitive adhesive tape having a pressure-sensitive adhesive layer (bubble-containing pressure-sensitive adhesive layer) of the bubble-containing adhesive.
The polymer polymerization rate of the tape obtained was 98.9 wt %.
The plastic net (of the Usage example of nonadhesive region 1) was laminated onto one pressure-sensitive adhesive face of the pressure-sensitive adhesive tape by using a four-axis laminator, while the network shape of the net was kept uniform, to give a pressure-sensitive adhesive tape having a bubble-containing pressure-sensitive adhesive layer laminated by the net on one pressure-sensitive adhesive face. The area ratios (occupying ratio) of the pressure-sensitive adhesive region and the net region (region other than the pressure-sensitive adhesive region) on the face having the net of the bubble-containing pressure-sensitive adhesive layer were respectively 78% for the pressure-sensitive adhesive region and 22% for the net region.

### (Example 2)

A photopolymerization initiator ["Irgacure 651", trade name (manufactured by Ciba Japan)]: 0.05 wt part, a photopolymerization initiator ["Irgacure 184", trade name (manufactured by Ciba Japan)]: 0.05 wt part were blended with a monomer mixture containing 2-ethylhexyl acrylate: 90 wt parts and acrylic acid: 10 wt parts as the monomer components, and ultraviolet ray was irradiated until the viscosity (as determined with a BH viscometer, No.5 rotor, 10 rpm, measurement temperature: 30°C) reached approximately 15 Pa·s, to give a partially polymerized composition (partial polymer, sirup). A photopolymerization initiator ["Irgacure 651", trade name (manufactured by Ciba Japan)]: 0.04 wt part, 1,6-hexanediol diacrylate: 0.1 wt part, and a surfactant ["MEGAFACE F-477", trade name, manufactured by DIC Corporation]: 0.7 wt part, and carbon black: 0.02 wt part were added to the sirup: 100 wt parts. In addition, hollow glass balloons ("CEL-STAR Z-27", trade name, manufactured by Tokai Kogyo Co., Ltd.) were added to the sirup at a ratio of 30 capacity % with respect to the entire volume of the sirup, to give an adhesive precursor. The entire volume of the hollow glass balloons in the adhesive precursor was approximately 23 capacity % with respect to the entire volume of the adhesive precursor. Nitrogen was introduced into the adhesive precursor for generation of bubbles, by using an apparatus equipped with a stator having many fine gears on a circular plate having a through hole in the center and a rotor facing the gears-equipped stator and having fine gears on a circular plate similarly to the stator. Nitrogen was supplied until the amount of the bubbles mixed became approximately 15 capacity % with respect to the entire volume of the liquid extruded, to give a bubble-containing pressure-sensitive adhesive composition.
The bubble-containing pressure-sensitive adhesive composition was fed into a wet-lamination roll coater through a tube (diameter: 19 mm, length: approximately 1.5 m), and the bubble-containing pressure-sensitive adhesive composition was coated between the release-coating faces of two polyethylene terephthalate bases release-coated on one face, to a thickness after drying and curing of 1.2 mm. In other words, the bubble-containing pressure-sensitive adhesive composition was held between the polyethylene terephthalate bases.
Ultraviolet ray at an illuminance of 5 mW/cm² was then irradiated from both sides for 4 minutes, curing the bubble-containing pressure-sensitive adhesive composition, to give a pressure-sensitive adhesive tape having a pressure-sensitive adhesive layer (bubble-containing pressure-sensitive adhesive layer) of the bubble-containing adhesive.
The polymer polymerization rate of the obtained tape was 98.9 wt %.
The porous nonwoven fabric (of the Usage example of nonadhesive region 2) was laminated onto one pressure-sensitive adhesive face of the pressure-sensitive adhesive tape by using a four-axis laminator to give a pressure-sensitive adhesive tape having a bubble-containing pressure-sensitive adhesive layer laminated by the porous nonwoven fabric on one pressure-sensitive adhesive face. The area ratios (occupying ratio) of the pressure-sensitive adhesive region and the nonwoven fabric region (region other than the pressure-sensitive adhesive region) on the face having the porous nonwoven fabric of the bubble-containing pressure-sensitive adhesive layer were respectively 62% for the pressure-sensitive adhesive region and 38% for the nonwoven fabric region.

### (Example 3)

A photopolymerization initiator ["Irgacure 651", trade name (manufactured by Ciba Japan)]: 0.05 wt part and a photopolymerization initiator ["Irgacure 184", trade name (manufactured by Ciba Japan)]: 0.05 wt part were blended with a monomer mixture containing 2-ethylhexyl acrylate: 90 wt parts, and acrylic acid: 10 wt parts as the monomer components, and ultraviolet ray was irradiated until the viscosity of the mixture (as determined by a BH viscometer, No. 5 rotor, 10 rpm, measurement temperature: 30°C) reached approximately 15 Pa·s, to give a partially polymerized composition (partial polymer, sirup). A photopolymerization initiator ["Irgacure 651", trade name (manufactured by Ciba Japan)]: 0.04 wt part, 1,6-hexanediol diacrylate: 0.1 wt part, and a surfactant ["MEGAFACE F-477", trade name, manufactured by DIC Corporation]: 0.7 wt part, and carbon black: 0.02 wt part were added to the sirup: 100 wt parts. In addition, hollow glass balloons ("CEL-STAR Z-27", trade name, manufactured by Tokai Kogyo Co., Ltd.) were added to the sirup at a ratio of 30 capacity % with respect to the entire volume of the sirup, to give an adhesive precursor. The entire volume of the hollow glass balloons in the adhesive precursor was approximately 23 capacity % with respect to the entire volume of the adhesive precursor. Nitrogen was then introduced into the adhesive precursor for generation of bubbles, by using an apparatus equipped with a stator having many fine gears on a circular plate having a through hole in the center and a rotor facing the stator having gears and having fine gears on a circular plate similarly to the stator. Nitrogen was supplied until the amount of the bubbles mixed reached approximately 15 capacity % with respect to the entire volume of the liquid extruded, to give a bubble-containing pressure-sensitive adhesive composition.
The bubble-containing pressure-sensitive adhesive composition was fed into a wet-lamination roll coater through a tube (diameter: 19 mm, length: approximately 1.5 m), and the bubble-containing pressure-sensitive adhesive composition was coated between the release-coating faces of two polyethylene terephthalate bases release-coated on one face, to a thickness after drying and curing of 1.2 mm. In other words, the bubble-containing pressure-sensitive adhesive composition was held between the polyethylene terephthalate bases.
Ultraviolet ray at an illuminance of 5 mW/cm² was then irradiated from both sides for 4 minutes, curing the bubble-containing pressure-sensitive adhesive composition, to give a pressure-sensitive adhesive tape having a pressure-sensitive adhesive layer (bubble-containing pressure-sensitive adhesive layer) of the bubble-containing adhesive.
The polymer polymerization rate of the obtained tape was 98.9 wt %.
The porous nonwoven fabric (of the Use example of nonadhesive region 3) was laminated onto one pressure-sensitive adhesive face of the pressure-sensitive adhesive tape by using a four-axis laminator, to give a pressure-sensitive adhesive tape having a bubble-containing pressure-sensitive adhesive layer covered by the porous nonwoven fabric on one pressure-sensitive adhesive face. The area ratios (occupying ratio) of the pressure-sensitive adhesive region and the nonwoven fabric region (region other than the pressure-sensitive adhesive region) on the face having a porous nonwoven fabric of the bubble-containing pressure-sensitive adhesive layer were respectively 8% for the pressure-sensitive adhesive region and 92% for the nonwoven fabric region.

### (Comparative Example 1)

A photopolymerization initiator ["Irgacure 651", trade name (manufactured by Ciba Japan)]: 0.05 wt part and a photopolymerization initiator ["Irgacure 184", trade name (manufactured by Ciba Japan)]: 0.05 wt part were blended with a monomer mixture containing 2-ethylhexyl acrylate: 90 wt parts and acrylic acid: 10 wt parts mixed as the monomer components, and ultraviolet ray was irradiated until the viscosity of the mixture (as determined by a BH viscometer, No.5 rotor, 10 rpm, measurement temperature: 30°C) reached approximately 15 Pa·s, to give a partially polymerized composition (partial polymer, sirup). A photopolymerization initiator ["Irgacure 651", trade name (manufactured by Ciba Japan)]: 0.04 wt part, 1,6-hexanediol diacrylate: 0.1 wt part, and a surfactant ["MEGAFACE F-477", trade name, manufactured by DIC Corporation]: 0.7 wt part, and carbon black: 0.02 wt part were added to the sirup: 100 wt parts. In addition, hollow glass balloons ("CEL-STAR Z-27", trade name, manufactured by Tokai Kogyo Co., Ltd.) were added to the sirup at a ratio of 30 capacity % with respect to the entire volume of the sirup, to give an adhesive precursor. The entire volume of the hollow glass balloons in the adhesive precursor was approximately 23 capacity % with respect to the entire volume of the adhesive precursor. Nitrogen was introduced into the adhesive precursor for generation of bubbles, by using an apparatus equipped with a stator having many fine gears on a circular plate having a through hole in the center and a rotor facing the gears-equipped stator and having fine gears on a circular plate similarly to the stator. Nitrogen was supplied until the amount of the bubbles mixed reached approximately 15 capacity % with respect to the entire volume of the liquid extruded, to give a bubble-containing pressure-sensitive adhesive composition.
The bubble-containing pressure-sensitive adhesive composition was fed into a wet-lamination roll coater through a tube (diameter: 19 mm, length: approximately 1.5 m), and the bubble-containing pressure-sensitive adhesive composition was coated between the release-coating faces of two polyethylene terephthalate bases release-coated on one face, to a thickness after drying and curing of 1.2 mm. In other words, the bubble-containing pressure-sensitive adhesive composition was held between the polyethylene terephthalate bases.
Ultraviolet ray at an illuminance of 5 mW/cm² was then irradiated from both sides for 4 minutes, curing the bubble-containing pressure-sensitive adhesive composition, to give a pressure-sensitive adhesive tape having a pressure-sensitive adhesive layer (bubble-containing pressure-sensitive adhesive layer) of the bubble-containing adhesive.
The polymer polymerization rate of the obtained tape was 98.9 wt %.

### (Evaluation)

The adhesive strength, the frictional force, and the processability of the samples in Examples and Comparative Example were measured or evaluated respectively.

### (Measurement of adhesive strength)

A pressure-sensitive adhesive sheet of 20 mm in width was pressure-bonded onto an adherend by one reciprocation of a 2-kg roller under the condition of 23°C and 50% RH, and then left still for 30 minutes after bonding. The 1800peeving adhesive strength (N/20 mm) of the sheet from the adherend was then determined by using a tensile tester (instrument name "TG-1kN," manufactured by Minebea) (tensile speed: 300 mm/minute).
The adherends used were an aluminum plate ("SK-A Aluminum Plate 1050P", trade name, manufactured by SUMITOMO LIGHT METAL INDUSTRIES, LTD.), a polyethylene terephthalate (PET) film ("S10 #100", trade name, manufactured by Toray Industries Inc.), and a glass plate ("Micro-Slide Glass, No. 5", trade name, manufactured by Matsunami Glass Ind., Ltd. thickness: 3 mm).

### (Measurement of frictional force)

A pressure-sensitive adhesive tape sample cut to a size of 2 cm×2 cm was placed on an adherend with its porous screen face (mesh face) in contact with the adherend. The adherend used was an aluminum plate ("SK-A Aluminum Plate 1050P", trade name, manufactured by SUMITOMO LIGHT METAL INDUSTRIES, LTD.).
Then, a 30 g weight was placed on the still-standing adhesive tape sample for application of a load of 30 g to the tape sample.
The pressure-sensitive adhesive tape sample was pulled in the horizontal direction at a speed of 300 mm/min, and the stress applied then was determined (N/cm²).

### (Evaluation of processability)

A pressure-sensitive adhesive tape sample (100×30 mm) was pressure-bonded onto an acrylic plate (100 mm×100 mm, thickness: 2 mm), while the end of the plate was covered with the tape sample. The porous screen face (mesh face) was made externally oriented (exposed) then. A sample for evaluation was prepared in this way.
The test sample was then inserted into a C-shaped aluminum frame (aluminum frame 43 in Figure 4) in the direction a as shown in Figure 4, and the lubricity then was evaluated according to the following evaluation criteria,

### Evaluation criteria:

Good (○) high lubricity, allowing easy insertion
Bad (×): low lubricity, difficulty in insertion.

When a foam tape is used as the sealing material between a panel end face and a frame in solar cell modules, high lubricity of the foam tape during insertion into frame is preferable.

Figure 4 is a schematic sectional view showing the method of evaluating the processability. In Figure 4, a reference numeral 41 represents a double-faced pressure-sensitive adhesive tape sample, 42 represents an acrylic plate; 43 represents an aluminum frame; and a represents the direction of insertion. The processability of the samples in Examples and Comparative Example were evaluated by the method shown in Figure 4.

[Table 1]

**[Table 1]**

| | Area ratio (%) | | Adhesive strength (N/20mm) | | | Frictional force (N/cm²) | Processability |
|---|---|---|---|---|---|---|---|
| | Porous screen region | Pressure-sensitive adhesive region | Aluminum | PET | Glass | | |
| Example 1 | 22 | 78 | 8 | 6 | 6 | 0.3 | ○ |
| Example 2 | 38 | 62 | 2 | 1 | 2 | 0.5 | ○ |
| Example 3 | 92 | 8 | 0.2 | 0.5 | 0.7 | 0.1 | ○ |
| Comparative Example 1 | 0 | 100 | 28 | 31 | 41 | 13 | × |

### [Industrial Applicability]

The present invention can be used as a double-faced pressure-sensitive adhesive tape for solar cell modules.

### [Reference Signs List]

- 1: Pressure-sensitive adhesive layer
- 2: Porous screen
- 3: Contactant (Object of contact)
- 41: Double-faced pressure-sensitive adhesive tape
- 42: Acrylic plate
- 43: Aluminum frame
- a: Insertion direction

## Claims

1. A double-faced pressure-sensitive adhesive tape for solar cell modules having a pressure-sensitive adhesive layer, **characterized in that** the frictional force, which is defined as the stress applied when a sample of 2 cmx2 cm in size having a 30 g load fixed is pulled on an aluminum plate in the horizontal direction at a speed of 300 mm/min, is 0.01 to 1.0 N/cm², on at least one face of the pressure-sensitive adhesive layer.

2. The double-faced pressure-sensitive adhesive tape for solar cell modules according to Claim 1, wherein the pressure-sensitive adhesive layer is an acrylic pressure-sensitive adhesive layer.

3. The double-faced pressure-sensitive adhesive tape for solar cell modules according to Claim 1 or 2, wherein the acrylic polymer contained in the acrylic pressure-sensitive adhesive layer as base polymer has a (meth)acrylic alkyl ester with an alkyl group having 1 to 14 carbon atoms as its main monomer component.

4. The double-faced pressure-sensitive adhesive tape for solar cell modules according to Claim 3, wherein the content of the (meth)acrylic alkyl ester with an alkyl group having 1 to 14 carbon atoms of the acrylic polymer is 60 wt % or more with respect to the total amount of the monomer components for production of the acrylic polymer.

5. The double-faced pressure-sensitive adhesive tape for solar cell modules according to any one of Claims 1 to 4, wherein the double-faced pressure-sensitive adhesive tape has a nonadhesive region at least on one face of the pressure-sensitive adhesive layer and the frictional force, which is defined as the stress applied when a sample of 2 cm×2 cm in size having a 30 g load fixed is pulled on an aluminum plate in the horizontal direction at a speed of 300 mm/min, is 0.01 to 1.0 N/cm², on at least one face of the pressure-sensitive adhesive layer

6. The double-faced pressure-sensitive adhesive tape for solar cell modules according to Claim 5, wherein the area ratio of the pressure-sensitive adhesive region to the nonadhesive region on the face of the pressure-sensitive adhesive layer having the nonadhesive region, adhesive region/nonadhesive region, is 5/95 to 95/5.

7. The double-faced pressure-sensitive adhesive tape for solar cell modules according to Claim 5 or 6, wherein the nonadhesive region on the pressure-sensitive adhesive layer is a porous screen.

8. The double-faced pressure-sensitive adhesive tape for solar cell modules according to Claim 7, wherein the thickness of the porous screen is 10 to 500 µm.

9. The double-faced pressure-sensitive adhesive tape for solar cell modules according to Claim 7, wherein the basis weight of the porous screen is 1.0 to 80 g/m².

10. The double-faced pressure-sensitive adhesive tape for solar cell modules according to Claim 5 or 6, wherein the adhesive strength of the face of the pressure-sensitive adhesive layer having the nonadhesive region (180° peeling, against aluminum plate, tensile speed: 300 mm/minute) is 0.1 to 50 N/20 mm.
